# EUROPÄISCHE PATENTSCHRIFT

(11) **EP 3 801 126 B1**
(45) Veröffentlichungstag und Bekanntmachung des Hinweises auf die Patenterteilung: **02.08.2023**
(21) Anmeldenummer: 19726888.1
(22) Anmeldetag: 17.05.2019
(51) Int. Cl.: A46B 13/00, F24S 40/20, A46B 7/02, A46B 7/10, A46B 13/02, A47L 11/38

(54) **ROTATIONSBÜRSTE ZUR REINIGUNG VON OBERFLÄCHEN**
ROTARY BRUSH FOR CLEANING SURFACES
BROSSE ROTATIVE SERVANT À NETTOYER DES SURFACES

(30) Priorität: 24.05.2018 AT 504272018
(43) Veröffentlichungstag der Anmeldung: 14.04.2021
(73) Patentinhaber: Garmehi, Behfam, 1080 Wien (AT)
(72) Erfinder: Garmehi, Behfam, 1080 Wien (AT)
(74) Vertreter: Babeluk, Michael
(86) Internationale Anmeldenummer: PCT/AT2019/060165
(87) Internationale Veröffentlichungsnummer: WO 2019/222776

(56) Entgegenhaltungen:
- EP-A1- 2 549 199
- EP-A1- 3 272 968
- CN-B- 104 467 646
- DE-A1- 19 847 239
- JP-A- 2014 236 213
- KR-B1- 101 626 350

## Beschreibung

Die Erfindung betrifft eine Reinigungsvorrichtung zur Reinigung von Oberflächen, insbesondere schrägen Oberflächen wie Dächern, mit zumindest einer Bürste und zumindest einer Antriebsvorrichtung zur Bewegung der Bürste entlang der Oberfläche, wobei die Antriebsvorrichtung einen Längsantrieb zur Bewegung zumindest einer Bürste entlang einer Längserstreckung der Oberfläche aufweist, und wobei zumindest zwei Längsführungen des Längsantriebs im Bereich der Enden der Bürste angeordnet sind.

Solche Vorrichtungen werden häufig auf Dächern oder anderen schrägen oder im Wesentlichen ebenen Flächen angebracht, um diese von störenden Materialien wie Schnee, Laub, Staub, Kot oder anderen Verschmutzungen zu reinigen. Sie können aber auch für andere Oberflächen wie Straßen oder Gehwegen eingesetzt werden. Dazu wird in der Regel die Bürste durch die Antriebsvorrichtung über die Oberfläche bewegt und diese durch die Bürste gereinigt. Insbesondere der Reinigung von Solarpanelen, die auf solchen Oberflächen angeordnet sind, kommt eine große Bedeutung zu. Eine wichtige Einsatzmöglichkeit betrifft auch die Reduzierung der Schneemasse auf Dächern, die zur Vermeidung von Dacheinstürzen, jedoch viel mehr zur Vermeidung von Dachlawinen beiträgt. Die Vermeidung von Dachlawinen leistet einen wesentlichen Beitrag zur Sicherheit von Menschen sowie zur Vermeidung von Sachschäden (z.B. an Fahrzeugen auf der Straße).

In der DE 10 2011 052 534 A1 wird eine Reinigungsvorrichtung dieser Art beschrieben. Dabei werden Bürsten über die Oberfläche hinwegbewegt. Bei unebenen Oberflächen oder Oberflächen, welche Vorsprünge und abstehende Elemente aufweisen, beispielsweise wenn Fenster oder Solarpaneele auf der Oberfläche angeordnet sind, ist die Reinigung oft nicht möglich oder nur unvollständig, da die Bürsten so weit von der Oberfläche beabstandet angeordnet werden müssen, dass sie keine vollständige Reinigung durchführen können. Werden die Bürsten näher an die Oberfläche angebracht, oder die Borsten verhärtet, so kann es zur Beschädigung der unter Umständen sensiblen Teile kommen.

In der EP 3,272,968 A1 wird eine Vorrichtung zur Reinigung beschrieben, bei der eine Bürste entlang einer Oberfläche bewegt werden kann. Ist die Oberfläche aber uneben, so bleiben Teilbereiche der Oberfläche ungereinigt. Befinden sich auf der Oberfläche Hindernisse, so ist unter Umständen sogar ein Anheben der Bürste notwendig, was die Reinigungsleistung weiter senkt.

In der US 4,352,221 A1 wird eine Reinigungsvorrichtung zur Reinigung von gewölbten Glasflächen beschrieben, welche eine Bürste mit geschwungener Längserstreckung aufweist. Dabei hat die Bürste einen festen Kern, um den sich eine als Stahlnetz ausgeführte Schicht mit Borsten bewegt. Aber auch diese Ausführungsform ist nicht dazu geeignet, auf Unebenheiten oder Hindernisse zu reagieren.

Aufgabe der vorliegenden Erfindung ist daher, eine Reinigungsvorrichtung bereitzustellen, die eine verbesserte Reinigung ermöglicht.

Diese Aufgabe wird erfindungsgemäß durch eine Reinigungsvorrichtung gemäß Anspruch 1 gelöst. Weitere Ausführungen sind in den abhängigen Ansprüchen definiert.

Durch die Elastizität kann die Bürste näher an die Oberfläche angeordnet werden. Bei Erhebungen wie beispielsweise Fenstern wird die Bürste gedehnt und bewegt sich im Bereich der Erhebung oberhalb dieser weiter. Die Bürste passt sich also an die Begebenheiten der Oberfläche flexibel an. Somit kommt es nicht zu einer Beschädigung, während eine vollständige Reinigung möglich ist. Dabei muss die Bürste die Oberfläche nicht durchgehend berühren, sie kann sogar so angeordnet sein, dass die Bürste die Oberfläche über wesentliche Bereiche nicht berührt. Insbesondere bei der Reinigung von Schnee ist dies vorteilhaft, da so eine optische ansprechende, dünne Restschicht übriggelassen wird und eine Beschädigung der Oberfläche vermieden wird. Besonders vorteilhaft ist, wenn die Bürste zwischen den zwei Längsführungen gespannt ist. Durch diese Vorspannung kann eine besonders elastisch ausgeführte Bürste verwendet werden, welche bei ebener Oberfläche im Wesentlichen gerade und im Wesentlichen formstabil ist, bei Hindernissen jedoch elastisch ausweichen kann. Besonders vorteilhaft ist, wenn die Bürste frei zwischen den zwei Längsführungen gespannt ist.

Dabei ist mit Elastizität entlang der Längsachse eine mechanische Anisotropie gemeint welche zumindest in Richtung der Längsachse vorhanden ist und die ermöglicht, dass sich die Länge der Bürste entlang der Längsachse bei Krafteinwirkung elastisch verändert und nach Beendigung der Krafteinwirkung wieder in den ursprünglichen Zustand zurückgeht. Mit anderen Worten ist die Bürste in Richtung der Längsachse zumindest dehnbar. Anders ausgedrückt wird bewirkt, dass sich die Länge der Bürste bei Krafteinwirkung elastisch verlängert und sich diese Längenänderung bei Beendigung der Krafteinwirkung im Wesentlichen wieder elastisch rückformt. Diese Elastizität kann auch bei entsprechender Belastung zu einer elastischen Krümmung der Bürste führen. Es wird also vorzugsweise auch eine Verbiegbarkeit quer zur Längsachse bedingt.

Weiters kann vorgesehen sein, dass sich die Längsführungen des Längsantriebs entlang der Längserstreckung der Oberfläche erstreckt. Dadurch kann die Bürste über die Oberfläche gut und einfach transportiert werden und eine möglichst flächendeckende Reinigung ermöglicht werden.

Auch ist vorteilhaft, wenn beide Längsführungen des Längsantriebs je zumindest einen Motor zur Bewegung der Bürste entlang der Längserstreckung aufweisen. Dadurch kann die flexible Bürste gleichmäßig bewegt werden und es kommt nicht zu einer unnötigen Belastung der Bürste.

Vorteilhaft ist, wenn die Bürste ein Dehnelement aufweist, welches als Torsionsfeder ausgeführt ist. Dieses Dehnelement bestimmt die Elastizität der Bürste insbesondere in Längsrichtung. Insbesondere, wenn eine Spiralfeder als Torsionsfeder verwendet wird, kann so kostengünstig eine sehr elastische und trotzdem formstabile Ausführungsform ermöglicht werden. Solche Federn sind in der Regel aus Metall, beispielsweise Stahl gefertigt.

Es kann vorgesehen sein, dass die Bürste ein Dehnelement aus einem elastomeren Kunststoff aufweist. Die Ausführung aus elastomeren Kunststoff ist elastisch aber auch langlebig und kann beispielweise aus Gummi hergestellt werden. Das Dehnelement kann dabei auch Metallteile aufweisen, beispielsweise kann es aus elastomeren Kunststoff gefertigt sein, in dem eine Spiralfeder, vorzugsweise aus Metall wie Aluminium, zumindest teilweise angeordnet ist.

In einer bevorzugten Ausführungsform weist die Bürste einen elastischen Kern auf. Dieser Kern ist im Wesentlichen im Zentrum des Querschnitts der Bürste angeordnet und ermöglicht eine elastische Dehnung und Bewegung der Bürste. Ist ein Dehnelement vorgesehen, so kann dieses beispielsweise als Kern dienen.

Weiters ist vorteilhaft, wenn die Bürste auf zumindest das dreifache, vorzugsweise auf zumindest das sechsfache einer unbelasteten Ruhelänge der Bürste entlang der Längsachse dehnbar ist. Dadurch wird eine Beschädigung von Objekten, die von der Oberfläche abstehen, vermieden. Dabei wird unter unbelasteter Ruhelänge eine Länge verstanden, die die Bürste bei keiner oder unwesentlicher Einwirkung von äußeren Zug- oder Drückkräften aufweist.

In einer bevorzugten Ausführungsform ist vorgesehen, dass die Längsachse der Bürste im Wesentlichen quer zu einer Hauptbewegungsachse der Antriebsvorrichtung steht und dass die Hauptbewegungsachse parallel zur Längserstreckung der Oberfläche steht. Dadurch wird die Reinigungswirkung der Bürste bei Bewegung dieser entlang der Hauptbewegungsachse maximiert.

Es kann auch vorgesehen sein, dass die Längsachse der Bürste im Wesentlichen quer zu einer Hauptbewegungsachse der Antriebsvorrichtung steht und dass die Hauptbewegungsachse normal zur Längserstreckung der Oberfläche steht. Damit steht die Hauptbewegungsachse vorzugsweise parallel zu zumindest einer Breitseite der Oberfläche, falls vorhanden. Bei Schrägdachflächen als Oberfläche kann damit bei geeigneter Ausführung erreicht werden, dass ein Ende der Bürste am First entlang bewegt wird, während das andere Ende der Bürste an der unteren Kante der Oberfläche, also der Traufe entlangbewegt wird. Damit ist die Bürste parallel zu den Breitseiten und damit zum Ortgang der Oberfläche und die Dachschräge kann von einem Ortgang zum anderen gereinigt werden.

Es ist vorteilhaft, wenn der Längsantrieb zumindest einen Linearantrieb aufweist, auf der die Bürste beweglich gelagert ist. Mit Linearantrieb ist dabei die Führung der Bürste auf einem Schlitten gemeint, der entlang zumindest einer Achse beweglich ist. Dabei können solche Linearführungen beispielweise Spindeltriebe aufweisen.

Es kann auch vorgesehen sein, dass der Längsantrieb zumindest ein Seilzugsystem aufweist, auf der die Bürste beweglich gelagert ist. Dies ist eine besonders einfache und kostengünstige Ausführungsform.

Auch vorteilhaft kann sein, wenn der Längsantrieb zumindest eine Schiene aufweist, wobei die Bürste durch zumindest einen Motor entlang der Schiene bewegbar angeordnet ist.

Besonders vorteilhaft ist, wenn die Schiene zumindest eine Zahnstange aufweist. Dadurch kann ein Zahnrad eines Schlittens in diesen eingreifen und so eine schlupffreie Bewegung des Schlittens an der Schiene erreicht werden.

In einer vorteilhaften Ausführungsform ist vorgesehen, dass die Bürste Borsten aufweist, welche im Wesentlichen normal zur Längsachse stehen und vorzugsweise elastisch ausgeführt sind. Die Borsten können unterschiedliche Eigenschaften aufweisen, wie beispielsweise unterschiedlich lang, dick oder biegesteif sein. Sie können in Büscheln an der Bürste angeordnet sein. Bei der Bewegung der Bürste kann über die Borsten eine Verbindung zur Oberfläche hergestellt werden und diese gereinigt werden. Dabei können die Borsten bandartig entlang der Längsachse der Bürste angeordnet sein, und/oder am Querschnitt verteilt um die Bürste angeordnet sein. Besonders bei Schneeräumungen ist vorteilhaft, wenn die Borsten in Längsrichtung elastisch sind.

Weiters ist vorteilhaft, wenn die Borsten in einen Bürstenkörper hineingeschossen sind oder alternativ mit einem Bürstenkörper einstückig ausgeführt sind, vorzugsweise durch Spritzgießen.

Des Weiteren kann vorgesehen sein, dass die Bürste zumindest eine Reinigungslamelle aufweist, welche sich im Wesentlichen entlang der Längsachse erstreckt und vorzugsweise elastisch ausgeführt ist. Die Reinigungslamelle kann alleine oder in Kombination mit Borsten verwendet werden und die Reinigung verbessern. Diese Reinigungslamellen sind vorzugsweise aus biegsamen Material wie Kunststoff und weisen eine längliche Form auf.

Weiters ist vorteilhaft, wenn die Antriebsvorrichtung einen Breitenantrieb zur Verschiebung zumindest einer Bürste entlang einer Quererstreckung der Oberfläche aufweist, und dass der Breitenantrieb in einem Winkel, vorzugsweise normal zum Längsantrieb steht. Dadurch kann der Bewegungsgrad der Bürste erweitert werden und ein noch größerer Teil der Oberfläche gereinigt werden. Der Längsantrieb kann auf dem Breitenantrieb angeordnet sein und durch diesen bewegbar sein, oder auch umgekehrt.

Auch vorteilhaft ist, wenn die Bürste drehbar ausgeführt ist. Dabei ist mit drehbar gemeint, dass sie in entlang ihrer Längsachse drehbar ausgeführt ist.

Die Bürste kann als Rundbürste ausgeführt sein, was besonders bei drehbaren Bürsten vorteilhaft sein kann.

In diesem Sinne ist besonders vorteilhaft, wenn zumindest ein Drehmotor zur Drehung der Bürste mit der Bürste verbunden ist.

Ganz besonders vorteilhaft ist, wenn an beiden Enden der Bürste je ein Drehmotor zur Drehung der Bürste vorgesehen ist. Dadurch können Verdrehungen bewusst eingeleitet oder auch verhindert werden.

Auch vorteilhaft ist, wenn die Bürste entlang einer Höhenachse normal zur Oberfläche verschiebbar ist. Dadurch kann abhängig während, vor oder nach der Bewegung der Bürste die Distanz verändert und an die Begebenheiten angepasst werden. Beispielsweise kann sie abhängig von Art und Menge der Verunreinigung, genauer Position der Bürste oder derzeitigem Zustand wie Arbeits- oder Ruhezustand verändert werden. So kann bei Detektion eines besonders großen Hindernisses eine vorübergehende Erhöhung oder gar Abhebung der Bürste eingeleitet werden.

Besonders vorteilhaft ist dahingehend, wenn die Reinigungsvorrichtung einen Hebeantrieb aufweist, und der Längsantrieb durch den Hebeantrieb entlang der Höhenachse verschiebbar ist.

Wenn vorgesehen ist, dass ein Gehäuse an einem Ende des Längsantriebs angeordnet ist, so kann die Bürste nach dem Betrieb in das Gehäuse einfahren und zwischen den Verwendungen geschützt gelagert werden.

Auch ist vorteilhaft, wenn die Reinigungsvorrichtung zumindest einen Warnsignalgeber, vorzugsweise eine Warnleuchte aufweist. Diese wird vorzugsweise eingeschalten, wenn die Reinigungsvorrichtung in Betrieb ist.

Es kann vorgesehen sein, dass zumindest eine Beleuchtungseinheit zur Beleuchtung der Oberfläche vorgesehen ist. Diese dient vor Allem der Beleuchtung um aus Sicherheitsgründen auf die Bearbeitung der Oberfläche hinzuweisen. Dabei kann die Beleuchtungseinheit auch die Reinigungsvorrichtung, vorzugsweise dessen beweglichen Teile beleuchten. Vorzugsweise wird sie insbesondere dann aktiviert, wenn die Reinigungsvorrichtung in Betrieb ist.

Besonders vorteilhaft ist, wenn auf der Bürste zumindest eine Düse zur Verteilung von Reinigungsmaterialien wie Wasser, Reinigungslösungen, Druckluft oder Luft aufweist. Diese Düsen könne zwischen den Borsten, Reinigungslamellen und anderen Reinigungselementen angeordnet sein und die Reinigungsleistung verbessern.

Zum Betrieb auf schlecht zugänglichen Oberflächen oder im Falle eines Energieversorgungsengpasses kann es vorteilhaft sein, wenn die Reinigungsvorrichtung einen Energiespeicher aufweist.

Weiters kann vorgesehen sein, dass die Reinigungsvorrichtung eine Kommunikationseinheit zur Kommunikation mit einem Steuerungsgerät, vorzugsweise über ein Netzwerk, besonders vorzugsweise über das Internet aufweist. Das Steuerungsgerät kann beispielsweise ein mobiles Gerät wie ein Mobiltelefon sein, welches über ein App die Steuerung der Reinigungsvorrichtung ermöglicht. Dabei kann beispielsweise vorgesehen sein, dass die Reinigungsvorrichtung über das Steuerungsgerät ein- oder ausgeschalten werden kann, oder dass bestimmte Parameter eingestellt werden, welche den Betrieb der Reinigungsvorrichtung regeln, wie Zeitintervalle oder der Verschmutzungsgrad. Die Verbindung zum Steuerungsgerät kann drahtlos, etwa über WLAN oder Funk, oder auch über eine Verkabelung erfolgen.

Es ist auch vorteilhaft, wenn die Reinigungsvorrichtung eine Regelungseinheit mit einem Zeitmesser, und vorzugsweise mit einer Zeitschaltuhr aufweist. Dadurch können Zeitintervalle zwischen den Reinigungen eingestellt werden.

Besonders vorteilhaft ist auch, wenn die Reinigungsvorrichtung zumindest einen Sensor zur Bestimmung von Umgebungsparametern, vorzugsweise einen Schneesensor, Regensensor oder Lichtsensor aufweist.

Zur Verbesserung der Reinigung kann auch vorgesehen sein, dass die Bürste zumindest abschnittsweise entlang ihrer Längsachse eine schraubenförmige Außenkontur aufweist. Die Borsten, bzw. Borstenbüschel und/oder die Lamellen können dafür so angeordnet oder ausgeführt sein, dass sich entlang der Längsachse der Bürste eine schraubenförmige Außenkontur ergibt. Dadurch können die entfernten Partikel bei Drehung der Bürste der Längsachse entlang bis zu einem Ende der Bürste geführt und gesammelt werden. Damit wirkt die Bürste wie ein Schneckenkonvektor und durch die axiale Rotationsbewegung der Bürste kann der Belag von der Oberfläche in die gewünschte Richtung dirigiert werden.

Vorzugsweise weist die Reinigungsvorrichtung eine Kommunikationseinheit zur Kommunikation mit einer Steuereinheit auf. Vorzugsweise ist die Kommunikationseinheit dazu eingerichtet eine drahtlose Verbindung wie beispielsweise eine Bluetooth-, eine WLAN-Verbindung oder eine Funkverbindung mit der Steuereinheit aufzubauen. Die Steuereinheit ist vorzugsweise ein Smartphone, Tablet, Computer oder dergleichen, das über ein Programm oder ein App die Reinigungsvorrichtung steuern kann.

In der Folge wird die vorliegende Erfindung anhand der in den Figuren dargestellten nicht einschränkenden Ausführungsvariante näher erläutert. Es zeigen:
- Fig. 1: eine schematische Skizze einer erfindungsgemäßen Reinigungsvorrichtung in einer Ausführungsvariante der Erfindung an einem Satteldach in einer Schrägansicht;
- Fig. 2: ein Detail II in Fig. 1;
- Fig. 3: eine schematische Seitenansicht der Bürste.

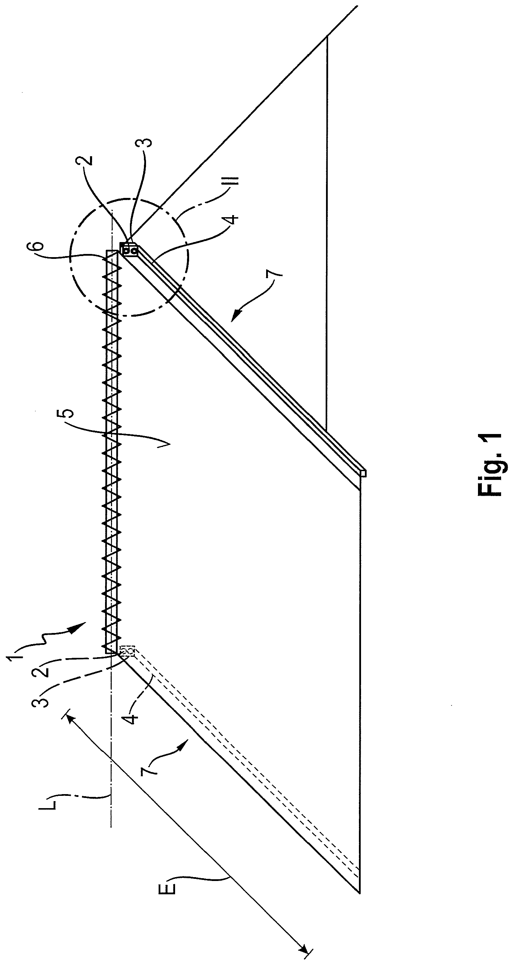

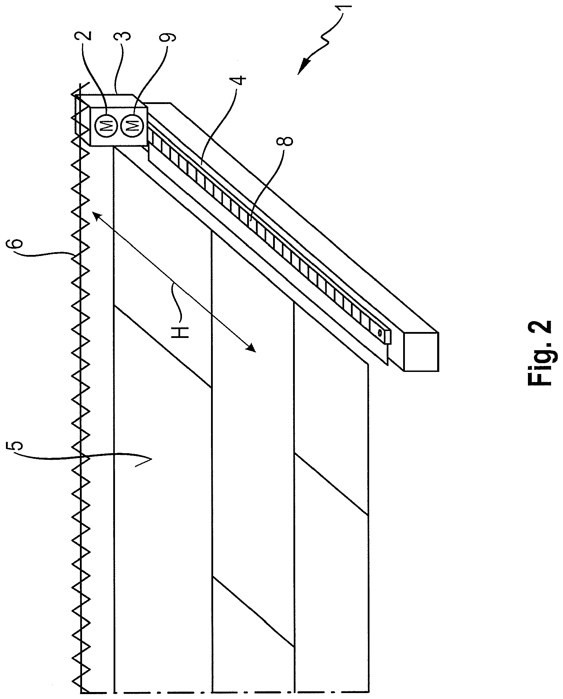

Fig. 1 und Fig. 2 zeigen ein klassisches Satteldach eines Gebäudes, welche zwei in einem Winkel aufeinanderstehende Dachflächen aufweist. Dabei ist eine Reinigungsvorrichtung 1 an einer Dachfläche angeordnet, welche die zu reinigende Oberfläche 5 darstellt. Die Reinigungsvorrichtung 1 weist eine runde Bürste 6 auf, welche eine Längserstreckung entlang einer Längsachse L aufweist, die im Wesentlichen der Länge der Oberfläche 5 entspricht. An beiden Enden der Bürste 6 ist diese drehbar auf Schlitten 3 von zwei Längsführungen 7 eines Längsantriebs gelagert. Der Längsantrieb besteht im Wesentlichen aus den zwei Längsführungen 7 und erstreckt sich entlang einer Längserstreckung E der Oberfläche 5. An beiden Schlitten sind Drehmotoren 2 vorgesehen, welche mit der Bürste 6 verbunden sind und diese drehen können. Die Schlitten 3 sind auf Schienen 4 beweglich angeordnet, die Zahnstangen 8 aufweisen. In diese greifen mit Motoren 9 angetriebene Zahnräder der Schlitten 3 ein, wodurch die Schlitten 3 auf den Schienen 4 der zwei Längsführungen 7 entlang einer Hauptbewegungsachse H bewegbar sind. Die Hauptbewegungsachse H steht dabei normal zur Längsachse L und damit auch normal zu den Breitseiten und damit den Ortgängen der Oberfläche 5. Somit kann die Bürste 6 im Wesentlichen über die gesamte Oberfläche 5 bewegt werden, während sie um Ihre Längsachse L gedreht wird. Dies ermöglicht eine vollständige Reinigung der Oberfläche 5. In einer alternativen Ausführungsform kann die Hauptbewegungsachse H auch parallel zu den Breitseiten der Oberfläche 5 und damit normal zur Längserstreckung E angeordnet sein, während die Längserstreckung L parallel zu der Längserstreckung E steht.

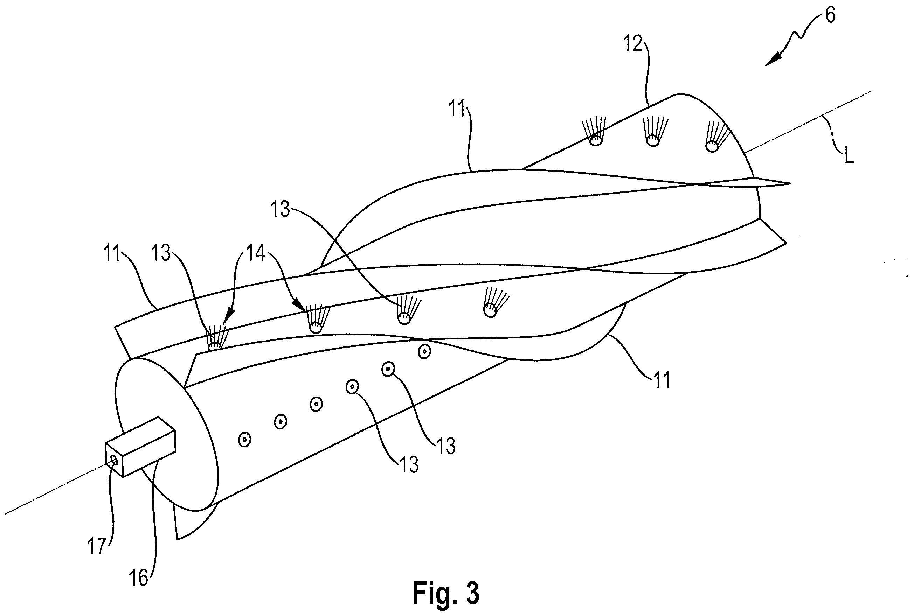

Fig. 3 zeigt einen Teil der als Rundbürste ausgeführte Bürste 6 im Detail. Sie weist drei Reinigungslamellen 11 auf, die gewindeartig entlang der Längsachse L um ein elastisches Dehnelement 12 angeordnet sind. Weiters sind Borsten 13 in Büschel 14 gesammelt und die Büschel 14 ebenso gewindeartig entlang der Längsachse L angeordnet. Vorzugsweise sind die Borsten etwa 2 cm lang. Die Borsten 13 und Reinigungslamellen 11 treten während der Reinigung mit der Oberfläche 5 in Kontakt und dienen als Reinigungselemente der Bürste 6. Solche Ausführungen sind besonders für Staub und Schmutz geeignet. Bei Schnee ist die Bürste 6 vorzugsweise so angeordnet, dass die Reinigungselemente die Oberfläche 5 über wesentliche Bereiche nicht berühren. Damit wird eine dünne, nicht störende Schicht Schnee auf der Oberfläche 5 belassen, was optisch ansprechender ist, als wenn die Oberfläche 5 vollständig von Schnee gereinigt wird. Die Reinigungselemente sind im Querschnitt im Wesentlichen gleichmäßig auf der Bürste 6 verteilt. Das Dehnelement 12 dient damit als Träger und Grundkörper und ist als zylindrischer Körper aus elastomeren Kunststoff ausgeführt. Die Reinigungselemente erstrecken sich im Wesentlichen radial von der Längsachse L weg und sind biegsam, sodass sie sich an die Oberfläche 5 anpassen und diese reinigen können.

Durch die Anordnung der Reinigungslamellen 11 und der Büschel 14 wird eine gewindeartige Außenkontur der Bürste 6 erreicht, auch wenn Düsen 13 zeilenweise entlang der Längsachse L angeordnet sind und nicht zu dieser Kontur beitragen. Bei Drehung der Bürste 6 wird so der Belag der Oberfläche 5 abhängig von der Drehrichtung in Richtung des einen oder anderen Endes der Bürste 6 transportiert. So können die Verunreinigungen an diesem Ende gesammelt, bzw. abtransportiert werden.

Des Weiteren sind auch Reinigungslösung führende Düsen 15 auf dem Dehnelement 12 angeordnet, welche in Zeilenparallel zur Längsachse L angeordnet sind. Während des Betriebs der Bürste 6 kann Reinigungslösung über die Düsen 15 in der Bürste 6 und an der Oberfläche 5 verteilt werden und so die Reinigung verbessert werden.

An den Enden der Bürste sind Vierkantachsen 16 vorgesehen, welche zur Verbindung mit den Drehmotoren 2 dienen. Eine Vierkantachse 16 weist axial eine Versorgungsöffnung 17 eines Leitungssystems im Inneren des Dehnelements 12 auf, über das die Düsen 15 mit Reinigungslösung versorgt werden.

## Patentansprüche

1. Reinigungsvorrichtung (1) zur Reinigung von Oberflächen (5), insbesondere schrägen Oberflächen (5) wie Dächern, mit zumindest einer eine Längsachse (L) aufweisenden Bürste (6) und zumindest einer Antriebsvorrichtung zur Bewegung der Bürste (6) entlang der Oberfläche (5), wobei die Antriebsvorrichtung einen Längsantrieb zur Bewegung zumindest einer Bürste (6) entlang einer Längserstreckung (E) der Oberfläche (5) aufweist, und wobei zumindest zwei Längsführungen (7) des Längsantriebs im Bereich der Enden der Bürste (6) angeordnet sind, **dadurch gekennzeichnet, dass** die Bürste (6) entlang einer Längsachse (L) elastisch ist.

2. Reinigungsvorrichtung (1) nach Anspruch 1, **dadurch gekennzeichnet, dass** die Bürste (6) zwischen den zwei Längsführungen (7) gespannt ist.

3. Reinigungsvorrichtung (1) nach Anspruch 1 oder 2, **dadurch gekennzeichnet, dass** sich die Längsführungen (7) des Längsantriebs entlang der Längserstreckung (E) der Oberfläche (5) erstrecken.

4. Reinigungsvorrichtung (1) nach einem der Ansprüche 1 bis 3, **dadurch gekennzeichnet, dass** beide Längsführungen (7) des Längsantriebs je zumindest einen Motor (2) zur Bewegung der Bürste (6) entlang der Längserstreckung (E) aufweisen.

5. Reinigungsvorrichtung (1) nach einem der Ansprüche 1 bis 4, **dadurch gekennzeichnet, dass** die Bürste (6) ein Dehnelement (12) aufweist, welches als Torsionsfeder ausgeführt ist.

6. Reinigungsvorrichtung (1) nach einem der Ansprüche 1 bis 5, **dadurch gekennzeichnet, dass** die Bürste (6) ein Dehnelement (12) aus einem elastomeren Kunststoff aufweist.

7. Reinigungsvorrichtung (1) nach einem der Ansprüche 1 bis 6, **dadurch gekennzeichnet, dass** die Bürste (6) auf zumindest das dreifache, vorzugsweise auf zumindest das sechsfache einer unbelasteten Ruhelänge der Bürste (6) entlang der Längsachse (L) dehnbar ist.

8. Reinigungsvorrichtung (1) nach einem der Ansprüche 1 bis 7, **dadurch gekennzeichnet, dass** die Längsachse (L) der Bürste (6) im Wesentlichen quer zu einer Hauptbewegungsachse (H) der Antriebsvorrichtung steht und dass die Hauptbewegungsachse (H) parallel zur Längserstreckung (E) der Oberfläche (5) steht.

9. Reinigungsvorrichtung (1) nach einem der Ansprüche 1 bis 8, **dadurch gekennzeichnet, dass** der Längsantrieb zumindest einen Linearantrieb aufweist, auf der die Bürste (6) beweglich gelagert ist und dass vorzugsweise der Längsantrieb zumindest ein Seilzugsystem aufweist, auf der die Bürste (6) beweglich gelagert ist.

10. Reinigungsvorrichtung (1) nach einem der Ansprüche 1 bis 9, **dadurch gekennzeichnet, dass** der Längsantrieb zumindest eine Schiene (4) aufweist, wobei die Bürste durch zumindest einen Motor (9) entlang der Schiene (4) bewegbar angeordnet ist und vorzugsweise die Schiene (4) zumindest eine Zahnstange (8) aufweist.

11. Reinigungsvorrichtung (1) nach einem der Ansprüche 1 bis 10, **dadurch gekennzeichnet, dass** die Bürste (6) Borsten (13) aufweist, welche im Wesentlichen normal zur Längsachse (L) stehen und vorzugsweise elastisch ausgeführt sind und/oder dass die Bürste (6) zumindest eine Reinigungslamelle (11) aufweist, welche sich im Wesentlichen entlang der Längsachse (L) erstreckt und vorzugsweise elastisch ausgeführt ist.

12. Reinigungsvorrichtung (1) nach einem der Ansprüche 1 bis 11, **dadurch gekennzeichnet, dass** die Bürste (6) drehbar ausgeführt ist, dass vorzugsweise zumindest ein Drehmotor (2) zur Drehung der Bürste (6) mit der Bürste (6) verbunden ist und dass besonders vorzugsweise an beiden Enden der Bürste (6) je ein Drehmotor (2) zur Drehung der Bürste vorgesehen ist.

13. Reinigungsvorrichtung (1) nach einem der Ansprüche 1 bis 12, **dadurch gekennzeichnet, dass** die Bürste (6) entlang einer Höhenachse normal zur Oberfläche (5) verschiebbar ist und dass vorzugsweise die Reinigungsvorrichtung (1) einen Hebeantrieb aufweist, und der Längsantrieb durch den Hebeantrieb entlang der Höhenachse verschiebbar ist.

14. Reinigungsvorrichtung (1) nach einem der Ansprüche 1 bis 13, **dadurch gekennzeichnet, dass** ein Gehäuse an einem Ende des Längsantriebs angeordnet ist.

15. Reinigungsvorrichtung (1) nach einem der Ansprüche 1 bis 14, **dadurch gekennzeichnet, dass** auf der Bürste (6) zumindest eine Düse (15) zur Verteilung von Reinigungsmaterialien wie Wasser, Reinigungslösungen, Druckluft oder Luft vorgesehen ist.

## Claims

1. Cleaning device (1) for cleaning surfaces (5), in particular sloping surfaces (5) such as roofs, comprising at least one brush (6) having a longitudinal axis (L) and at least one drive device for moving the brush (6) along the surface (5), wherein the drive device has a longitudinal drive for moving at least one brush (6) along a longitudinal extension (E) of the surface (5), and wherein at least two longitudinal guides (7) of the longitudinal drive are arranged in the region of the ends of the brush (6), **characterised in that** the brush (6) is elastic along a longitudinal axis (L).

2. Cleaning device (1) according to claim 1, **characterised in that** the brush (6) is tensioned between the two longitudinal guides (7).

3. Cleaning device (1) according to claim 1 or 2, **characterised in that** the longitudinal guides (7) of the longitudinal drive extend along the longitudinal extension (E) of the surface (5).

4. Cleaning device (1) according to one of claims 1 to 3, **characterised in that** both longitudinal guides (7) of the longitudinal drive each have at least one motor (2) for moving the brush (6) along the longitudinal extension (E).

5. Cleaning device (1) according to one of claims 1 to 4, **characterised in that** the brush (6) has an expansion element (12) which is designed as a torsion spring.

6. Cleaning device (1) according to one of claims 1 to 5, **characterised in that** the brush (6) has an expansion element (12) made of an elastomeric plastic.

7. Cleaning device (1) according to one of claims 1 to 6, **characterised in that** the brush (6) is extensible to at least three times, preferably to at least six times, an unloaded rest length of the brush (6) along the longitudinal axis (L).

8. Cleaning device (1) according to one of claims 1 to 7, **characterised in that** the longitudinal axis (L) of the brush (6) is substantially transverse to a main axis of movement (H) of the drive device, and **in that** the main axis of movement (H) is parallel to the longitudinal extension (E) of the surface (5).

9. Cleaning device (1) according to one of claims 1 to 8, **characterised in that** the longitudinal drive has at least one linear drive on which the brush (6) is movably mounted, and **in that** preferably the longitudinal drive has at least one cable pull system on which the brush (6) is movably mounted.

10. Cleaning device (1) according to one of claims 1 to 9, **characterised in that** the longitudinal drive has at least one rail (4), wherein the brush is movably arranged along the rail (4) by means of at least one motor (9) and preferably the rail (4) has at least one rack (8).

11. Cleaning device (1) according to one of claims 1 to 10, **characterised in that** the brush (6) has bristles (13) which are substantially perpendicular to the longitudinal axis (L) and are preferably of elastic design, and/or **in that** the brush (6) has at least one cleaning lamella (11) which extends substantially along the longitudinal axis (L) and is preferably of elastic design.

12. Cleaning device (1) according to one of claims 1 to 11, **characterised in that** the brush (6) is rotatably designed, **in that** preferably at least one rotary motor (2) for rotating the brush (6) is connected to the brush (6), and **in that** particularly preferably a rotary motor (2) for rotating the brush is respectively provided at both ends of the brush (6).

13. Cleaning device (1) according to one of claims 1 to 12, **characterised in that** the brush (6) is displaceable along a height axis normal to the surface (5), and **in that** preferably the cleaning device (1) has a lifting drive, and the longitudinal drive is displaceable along the height axis by the lifting drive.

14. Cleaning device (1) according to one of claims 1 to 13, **characterised in that** a housing is arranged at one end of the longitudinal drive.

15. Cleaning device (1) according to one of claims 1 to 14, **characterised in that** at least one nozzle (15) for distributing cleaning materials such as water, cleaning solutions, compressed air or air is provided on the brush.

## Revendications

1. Dispositif de nettoyage (1) pour nettoyer des surfaces (5) notamment des surfaces inclinées (5) tels que des toits, ayant au moins une brosse (6) ayant un axe longitudinal (L) et au moins un dispositif d'entraînement pour entraîner la brosse (6) le long de la surface (5), le dispositif d'entrainement ayant un entraînement longitudinal pour déplacer au moins une brosse (6), selon l'extension longitudinale (E) de la surface (5) et au moins deux guides longitudinaux (7) de l'entraînement longitudinal dans la région des extrémités de la brosse (6),
dispositif de nettoyage **caractérisé en ce que**
la brosse (6) est élastique selon un axe longitudinal (L).

2. Dispositif de nettoyage (1) selon la revendication 1,
**caractérisé en ce que**
la brosse (6) est tendue entre deux guides longitudinaux (7).

3. Dispositif de nettoyage (1) selon la revendication 1 ou 2,
**caractérisé en ce que**
les guides longitudinaux (7) de l'entraînement longitudinal s'étendent selon l'extension longitudinale (E) de la surface supérieure (5).

4. Dispositif de nettoyage (1) selon l'une des revendications 1 à 3,
**caractérisé en ce que**
les deux guides longitudinaux (7) de l'entraînement longitudinal ont chacun au moins un moteur (2) pour entraîner la brosse (6) selon l'extension longitudinale (E).

5. Dispositif de nettoyage (1) selon l'une des revendications 1 à 4,
**caractérisé en ce que**
la brosse (6) a un élément d'extension (12) en forme de ressort de torsion.

6. Dispositif de nettoyage (1) selon l'une des revendications 1 à 5,
**caractérisé en ce que**
la brosse (6) a un élément d'extension (12) en une matière plastique élastomère.

7. Dispositif de nettoyage (1) selon l'une des revendications 1 à 6,
**caractérisé en ce que**
la brosse (6) est extensible au moins du triple, de préférence au moins du sextuple de la longueur de repos de la brosse (6) en position non sollicitée, selon l'axe longitudinal (L).

8. Dispositif de nettoyage (1) selon l'une des revendications 1 à 7,
**caractérisé en ce que**
l'axe longitudinal (L) de la brosse (6) est pratiquement transversal à l'axe principal de déplacement principal (H) du dispositif d'entraînement et l'axe principal de déplacement (H) est parallèle à l'extension longitudinale (E) de la surface (5).

9. Dispositif de nettoyage (1) selon l'une des revendications 1 à 8,
**caractérisé en ce que**
l'entraînement longitudinal comporte au moins un entraînement linéaire sur lequel la brosse (6) est montée mobile et **en ce que** de préférence l'entraînement longitudinal comporte au moins un système de câble de traction recevant la brosse (6) de manière mobile.

10. Dispositif de nettoyage (1) selon l'une des revendications 1 à 9,
**caractérisé en ce que**
l'entraînement longitudinal comporte au moins un rail (4), la brosse étant montée, entraînée par au moins un moteur (9) le long du rail (4) et de préférence, le rail (4) comporte au moins une crémaillère (8).

11. Dispositif de nettoyage (1) selon l'une des revendications 1 à 10,
**caractérisé en ce que**
la brosse (6) à des poils (13) qui sont pratiquement perpendiculaires à l'axe longitudinal (L) et de préférence, ils sont élastiques et/ou la brosse (6) comporte au moins une lamelle de nettoyage (11) qui s'étend pratiquement le long de l'axe longitudinal (L) et elle est de préférence élastique.

12. Dispositif de nettoyage (1) selon l'une des revendications 1 à 11,
**caractérisé en ce que**
la brosse (6) est montée à rotation, si de préférence au moins un moteur rotatif (2) est relié dans le sens de la rotation à la brosse (6) et tout particulièrement de préférence les deux extrémités de la brosse (6), ont un moteur de rotation (2) prédéfini pour entraîner la brosse (6) en rotation.

13. Dispositif de nettoyage (1) selon l'une des revendications 1 à 12,
**caractérisé en ce que**
la brosse (6) coulisse le long d'un axe montant, perpendiculaire à la surface (5) et de préférence le dispositif de nettoyage (1) comporte un entraînement à levier et l'axe longitudinal est coulissant, selon l'axe vertical.

14. Dispositif de nettoyage (1) selon l'une des revendications 1 à 13,
**caractérisé en ce qu'**
un boîtier est à une extrémité de l'entraînement longitudinal.

15. Dispositif de nettoyage (1) selon l'une des revendications 1 à 14,
**caractérisé en ce que**
la brosse (6) comporte au moins une buse (15) pour répartir des produits de nettoyage tels que l'eau, une solution de nettoyage, de l'air comprimée ou de l'air.
